# EUROPEAN PATENT APPLICATION

(11) **EP 1 768 221 A1**
(43) Date of publication of application: **28.03.2007**
(21) Application number: 05759619.9
(22) Date of filing: 25.05.2005
(51) Int. Cl.: H02G 7/14, H02G 7/12

(54) **IMPROVED WIRE DANCING DAMPER FOR OVERHEAD POWER TRANSMISSION LINES**

(30) Priority: 25.05.2004 EP 04076528
(71) Applicant: "Elektrosetstroyprojekt" Joint-Stock Company, Moscow, 127566 (RU); Université de Liège, 4020 Liège (BE)
(72) Inventor: VINOGRADOV "Elektrosetstroyprojekt" Joint-StockCo, Moscow, 127566 (RU); LILIEN, Jean-Louis, B-4031 Angleur (BE)
(74) Representative: Glawe, Delfs, Moll
(86) International application number: PCT/RU2005/000302
(87) International publication number: WO 2005/117228

(57) **Abstract**

The damper (1) for galloping bundled conductors (2) for overhead power transmission lines comprising a body (3) provided with at least two connecting means (8) for connecting the damper to each of the bundled conductors (2). The damper is provided with a hub (6) carried by the body (3) and comprising an assembly of inner and outer plates (30, 40) concentrically mounted on a central pin (20), the outer plates (40) being fixed to the pin (20) on both sides of the inner plates (30), the inner plates (30) being mounted on the pin (20) by means of an elastomeric bush (17) and being secured to the hub (6), the plates (30, 40) are provided with at least two series of recesses (34, 36) each series being disposed concentrically with the pin (20) along a circle with different radius, corresponding recesses (34, 36) on the inner plates (30) and the outer plates (40) being coupled in matching pairs, within each matching pair of said coupled recesses a spherical elastomeric insert (50) being provided for frictional engagement within the plates (30, 40), whereas at least one pendulum (60) being affixed to either one of the inner or outer plates (30, 40) in a plane orthogonal to the axis of the central pin (20).

## Description

This invention relates to the power generating industry, particularly to dampers for galloping conductors for overhead power transmission lines.

It is well known that overhead extra high voltage power transmission lines in the form of bundled conductors are supported by anchor towers and intermediate pylons with certain sag forming a catenary line.

A bundled conductor is usually constituted by several sub-conductors, for example 2 to 4 (more rarely to 8), which are separated from each other by 40 cm to 50 cm, and are generally located along a circle line of a diameter ranging from about 40 cm to 1 m and more. Said bundle of conductors typically represents one phase of the three-phase overhead power transmission line. The conductors are maintained separated one from another along the spanlength by (2) interphase spacers at about every 50 m.

Overhead conductors are subjected to various kinds of vibration defined by prevailing weather conditions caused particularly by crosswind. For example Aeolian vibration is a periodic motion of conductors predominantly in the vertical plane of relatively high frequency of the order of ten or several tens Hz and small amplitude, of the order of the conductor diameter, caused by wind action. Wake induced vibration is periodic motion of conductors in a bundle caused by the wind, predominantly in the horizontal plane, but also including some vertical component, of frequency of the order of 1 or a few Hz, and amplitude, of the order of the distance between sub-conductors.

The third type of vibration known as 'galloping' is the one with which the present invention is primarily concerned, and relates to the periodic motion of a conductor, or a bundle in general, predominantly in the vertical plane, of low frequency of the order of a fraction of 1 Hz, typically 0.1 to 1 Hz, and very high amplitude, for example, several tens of centimetres to several metres, whereas maximum amplitudes' values can be of the same order as the original sag. This kind of vibration usually occurs when ice is deposited on the conductors, but may also occur in snowy or frosty conditions and, rarely, without any deposits. Such galloping can have deleterious effects, such as phase to phase flashover causing outages and arcing damage to conductors, loosening of tower bolts, wear and damage to suspension and tension clamps, spacers and vibration dampers and, in some critical cases, structural damage to towers.

The asymmetric build up of ice and snow on conductors forms an aerodynamic profile causing a lift force. Due to increased torsional stiffness of the bundle (in comparison to single conductors) its rotation is limited, which in turn leads to the build up of an unbalanced ice /wet snow profile compared to that on single conductors. Also the vertical and torsional natural vibration frequencies of bundled conductors fitted with spacers are of the same, quite narrow, range. Accordingly under this condition, a resonant vertical oscillation may be induced by the torsional oscillation causing bundled conductors' galloping process. The concept of detuning, namely separating vertical and torsional frequencies, and also torsional damping, *i.e.* limiting the transfer of energy from torsional to vertical movements, has been evolved for the control of bundled conductors' galloping.

During the early 1990's the University of Liège in collaboration with other research teams devised a Torsional Damper & Detuner (TDD) combining properties of torsional damping and detuning. The TDD is mounted onto bundled conductors using appropriate clamps, which do not damage the conductors due to using linings of metal or rubber; said device is provided with a pendulum transmitting its torsional motion to a rubber damping element. The pendulum is suspended by means of nylon bearings selected for their long fatigue performance, and the damping element is housed in a protective sleeve of aluminium alloy in order to provide the maximum service life. The torsional stiffness and damping of the rubber damping element, the moment of inertia of the pendulum about its pivot and the distance between the TDD centre of gravity and the centre of the bundle are the main technical parameters of the device. The typical natural frequency of the system is 0.5 Hz. Two or three devices are normally installed per span at positions defined by calculations. The TDD has a typical weight of 20-30 kg and is suitable for bundled conductors up to a quad configuration, but is not suitable for single conductors. The main disadvantages of the design of said damping device is its high cost due to big size and accordingly high cost of the damping element which is manufactured of special rubber with high internal viscosity.

SU 1381636 to Golubev et al discloses a spacer-damper for bundled conductors for overhead power transmission lines comprising damping units, their number equal to the bundled conductors' number, whereas each damping unit comprises a cage with two rows of elastomeric spheres on both sides of the cage held between two end discs. The cage and the discs are provided with conic recesses with spherical bottom disposed by pairs on the same circle diameter in order to fix the elastomeric spheres. Damping units, their number being equal to the number of damped conductors, are arranged in a spacer body with their cages connected to conductors through arms and clamps. Each damping unit comprises a pin extending through a passage in the cage and joining the discs. The vibrations arising in the conductors are transmitted through the arms to the cages and damped by the elastomeric spheres accommodated in their recesses. Such a spacer-damper has been used quite successfully, but the level of damping provided by said spacer-damper is insufficient for its application in dampers for galloping conductors.

Another damper is disclosed in WO 00/77902 to *Hydro-Québec* company, suggesting application of elastomeric rollers for absorbing oscillation movement of overhead conductors. The main application area of this damper is damping of conductor oscillations caused by vibration, therefore deflection angles of the damper moving element are insufficient for damping the galloping.

The object of the present invention is to provide an improved damper for galloping conductors for overhead power transmission lines.

According to the invention the object is achieved by using a damper for bundled overhead conductors comprising a body provided with at least two connecting means for connecting the damper to each of the bundled conductors. Said damper is provided with a hub carried by the body and comprising an assembly of inner and outer plates concentrically mounted on a central pin; the outer plates are fixed to the pin on the both sides of the inner plates; the inner plates are mounted on the pin by means of an elastomeric bush and secured to the hub; the plates are provided with at least two series of recesses, each series is disposed concentrically with the pin along a circle with different radius; corresponding recesses on the inner plates and the outer plates are coupled in matching pairs, within each matching pair of said coupled recesses a spherical elastomeric insert is provided for frictional engagement with the plates, whereas at least one pendulum is affixed to either one of the inner or outer plates in a plane orthogonal to the axis of the central pin.

Conveniently the damper comprises one pair of outer plates and one pair of inner plates, but an embodiment is also possible with inner plates being integrated one with another and forming a single unit. The hub is sandwiched between the inner plates, the outer plates being disposed on both sides thereof. The hub is circular. The body may comprise at least two arms, at the ends of said arms, distal from the hub clamps being located for connection to the bundled conductors. The clamps are conveniently provided with protective sleeves to protect the conductors against any damage that may be occasioned due to clamping. In the case where more than two conductors in a bundle are to be served by the damper of the present invention, additional arms and clamps will be suitably provided in fixed association with the hub. The clamps may be rigid with the body. As an alternative the clamps may be hinged or pivotally connected to the body or otherwise connected to provide the possibility of live relative movement therebetween to compensate for any relative longitudinal movement of the conductors.

The plates are circular and the recesses are in the form of elongate channels with rounded ends extending substantially along corresponding circles' generatrixes, whereas in one embodiment of the invention each recess being disposed within a quadrant of the circle. The recesses may be of elliptical or arcuate form. The outer recesses may be of arcuate form with the radius of curvature of the arc being approximately twice the distance from the centre line of the recess to the axis. The inner recesses may be of elliptical form with the ratio of the minor to the major axis of the ellipse being about of 1:2.

Each recess in cross section, perpendicular to its longitudinal axis may be of quadrangular or obtuse-angled shape with a rounded vertex, and in longitudinal cross section may be radiussed to give a slightly concaved effect with rounded ends, the depth of the recess decreasing longitudinally from the centre to the outer limits thereof.

Preferably only one elastomeric insert is provided for each recess.

Each pendulum may be made as a cranked frame or a cranked arm, for example of tubular form, with an elongated rod extending from the centre of the damper and attached to a respective outer plate, a weight and a counterweight being fixed to the ends of each rod. As an alternative, each pendulum may comprise two arms diametrically disposed on any of the outer or inner plates. A stopper or stoppers may be provided to limit the extent of movement of the pendulum when in use.

Each pendulum may be orientated as desired to facilitate mounting and be independent of the characteristics or profile of the bundle conductors. Thus the rest position of the pendulum may be vertical or horizontal or may be angularly orientated between the horizontal and vertical positions.

Also disclosed in the claimed invention is a damper for galloping bundled conductors for overhead power transmission lines provided with a tubular protective casing, comprising the inner and the outer series of spacer rings with conic surfaces, the ends of the casing are protected by weather-resistant elastomeric caps fitted with fluoroplastic seals, wherein spherical elastomeric inserts are located between said inner and outer series of spacer rings and said conic surfaces are provided with recesses for accommodation of these elastomeric inserts, whereas the inner series of spacer rings is connected to the body arms by spline joints, the outer spacer rings are also fixed within the protective casing by spline joints, and a pendulum is attached to the protective casing.

Embodiments of the damper according to the invention are described below with reference to the accompanying drawings, wherein:

Figure 1 is a schematic view of the damper *in situ* on the triple bundle conductors of overhead power transmission line (the second pendulum in the construction is omitted for clarity);

Figure 2 is a side elevation of the damper corresponding to the view shown in Figure 1 ;

Figure 3 is a cross-sectional view of the damper body showing its detailed construction;

Figure 4 is a cross-sectional view of the damper body in part showing its construction in further details;

Figure 5 is a front view of a damper part, namely a plate with recesses, showing its design in details;

Figure 6 is a side view of the part shown in Figure 5;

Figure 7 is a longitudinal cross-sectional view along the line VII-VII of the detail shown in Figures 5 and 6;

Figure 8 is a lateral cross-sectional view along the line VIII-VIII of the detail shown in Figure 7;

Figure 9 is a longitudinal cross-sectional view on the line IX-IX of another detail shown in Figures 5 and 6;

Figure 10 is a cross-sectional view of an alternative embodiment of a damper body to that shown in Figure 3;

Figure 11 is a front elevation of a further embodiment of a damper for twin bundle conductors;

Figure 12 is a side elevation corresponding to the view in Figure 11;

Figure 13 is a plan view corresponding to the view shown in Figure 12;

Figure 14 is a front elevation of one more embodiment of a damper for the twin bundle conductors;

Figure 15 is a side elevation corresponding to the view in Figure 14;

Figure 16 is a plan view corresponding to the view shown in Figure 15;

Figure 17 is a front elevation of another embodiment of damper designed for quad bundle conductors;

Figure 18 is a side elevation corresponding to the view in Figure 17;

Figure 19 is a plan view corresponding to the view shown in Figure 17;

Figure 20 is a front elevation of a damper with additional pendulums, mounted on each of the main pendulums and thus providing offsetting of the pendulum centres of mass (only one main and one additional pendulums are shown for clarity);

Figures 21-22 are front elevations of the damper comprising pendulum bobs disposed angularly to horizon or horizontally.

Figure 23 is a front elevation of the damper body comprising an additional bushing element of butyl rubber.

Figure 24 is a cross-sectional view of the central part of a damper corresponding to an alternative embodiment and provided with a tubular protective casing.

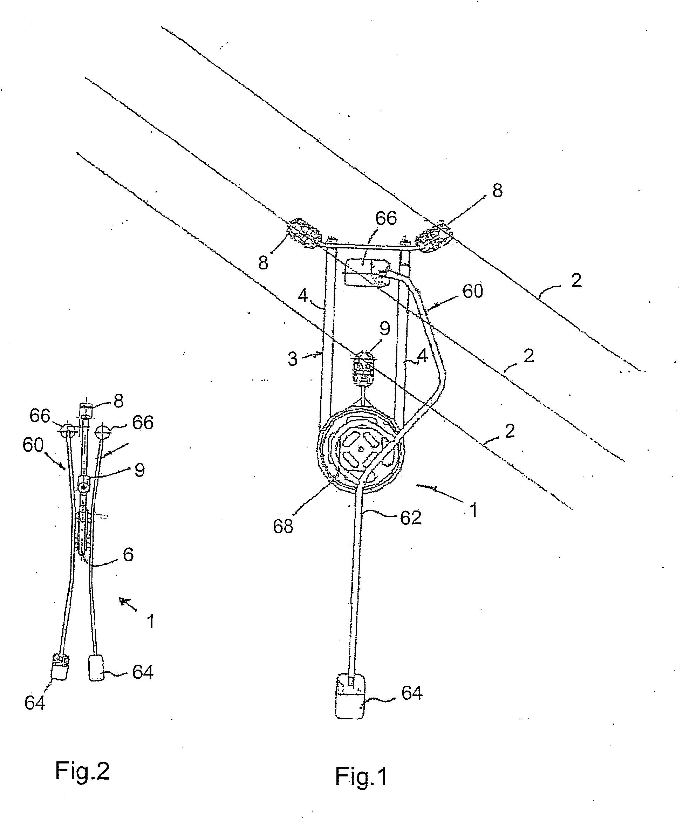

Referring first to Figure 1, it may be seen that damper 1 is secured to a bundle of overhead line conductors 2, in this example the number of conductors being three. The damper comprises a body 3 made as two arms 4 embracing a hub 6 and provided at their distal ends remote from the hub 6 with clamps 8 each adapted for connecting the damper to the conductors 2. For a triple bundle of conductors a further clamp 9 is mounted on the hub 6 at its top mid-way between the arms of the body 3.

With reference now to all the Figures 1 to 9, the hub 6 of the damper 1 includes the outer portion 10, at the periphery of which the arms 4 of the body 3 are affixed symmetrically opposing to each other. In its inner part the hub 6 has a stepped boss 12 provided with a through bore 14 with an outer insert 15 made of e.g. butyl rubber and an inner bush 17 made of e.g. fluoroplastic (PTFE).

The central pin 20 being in frictional engagement with the bush 17 extends through said bush 17 and the bore 14, the axis of said pin 20 is parallel to the axis of the bundled conductors. The pin 20 may be designed as a bolt having a castle nut 22 fixed on the threaded end 23 of the bolt, a split pin 24 is provided for secure locking the nut 22 in use.

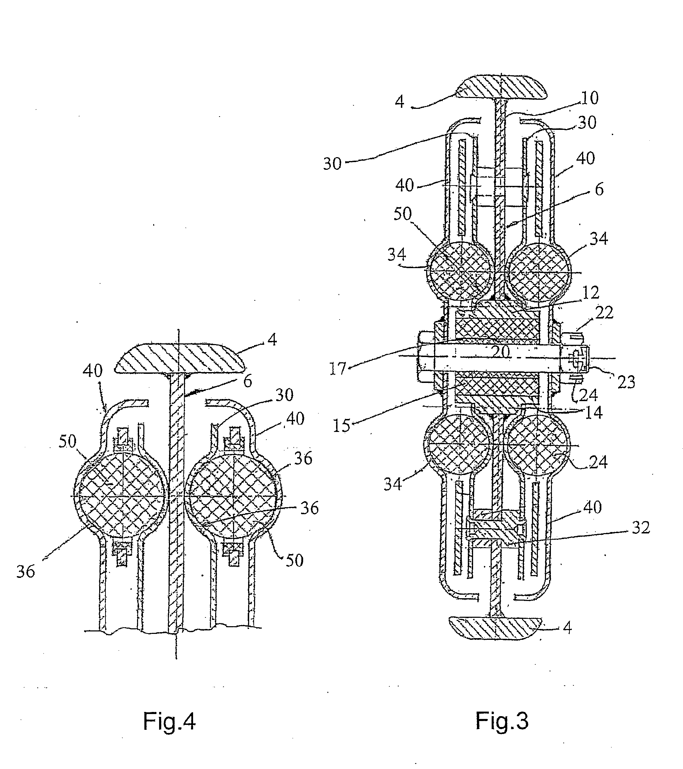

Inner plates 30 located, as shown in details in Figure 2, on the stepped central boss 12 of the hub 6 are secured to its outer portion 10 by fixing means 32 at four points 33. Each plate 30 is provided with two series of recesses 34, 36 on relatively inner and relatively outer circle diameters, the recesses 34 being smaller in diameter than the recesses 36, as can be more clearly seen in Figure 4. Outer plates 40 also have corresponding recesses 34, 36 disposed at the same diameters and matching those on plates 30 to provide races for spherical elastomeric inserts 50.

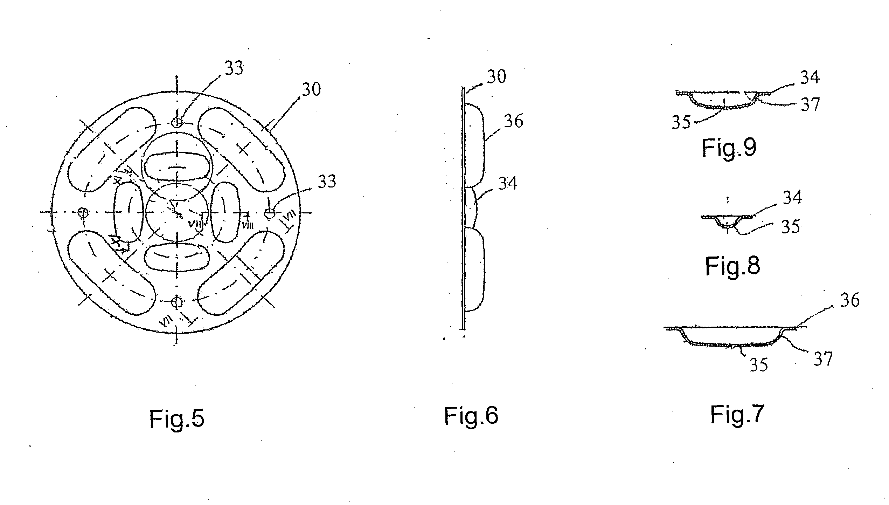

Each recess 34, 36 is of elongate form and may follow an elliptical form or a curvature of certain radius. As can be seen in Figures 6 to 9, the recesses are channels of approximate quadrangular or obtuse-angular shape in cross-section with rounded vertexes and ends 35, 37, and of varying depth becoming shallower towards said ends 37.

The outer plates 40 effectively clamp the elastomeric inserts 50 into the matching recesses 34, 36 by tightening the nut 22 as aforesaid to provide the integrity of the sandwiched configuration. The outer plates 40 are mounted on the central pin 20, on which the hub 6 is movably fixed by means of the bush 17 and the insert 15, the inner plates 30 being rigidly fixed to the hub 6. Accordingly, relative and limited movement may take place between the inner plates and the outer plates.

As shown in Figures 1 and 2 each pendulum 60 is attached to the respective outer plate 40 and consists of a cranked rod 62 with a bob 64 and a counterweight 66 fixed to the opposite ends of the cranked rod at appropriate distance from the pendulum rotation axis. The middle part of the rod with an attached cranked strap 68 is affixed to said outer plate 40. The same pendulum is attached to the other outer plate (in Figure 1 the second pendulum is omitted for clarity; see Figure 2)

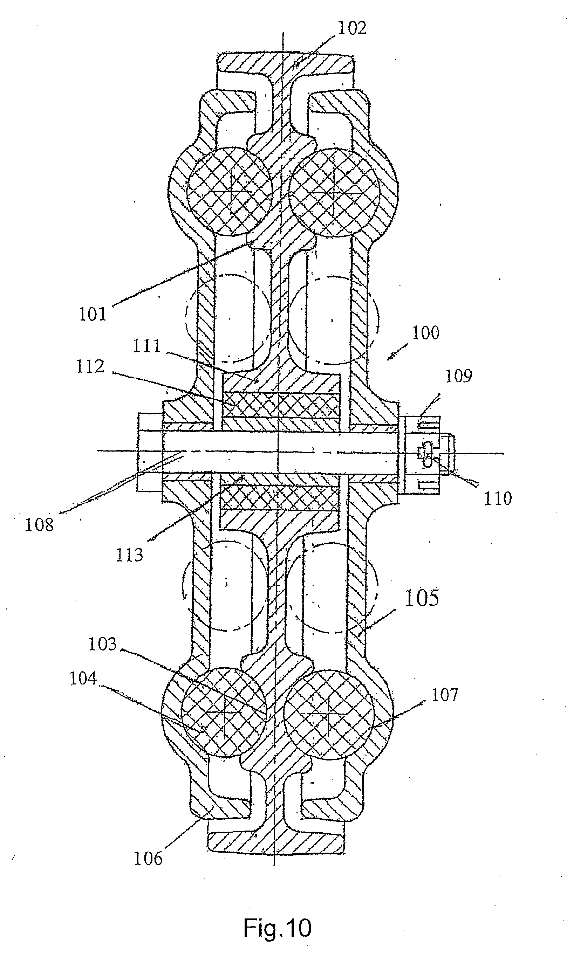

The damper shown in Figure 10 comprises a body 100 of similar form to that shown in Figure 3 except that the two inner plates are replaced with a single integrated diaphragm 101 having flange 102 at its outer periphery for strength and protection against weather conditions, both sides of the diaphragm 101 being provided with the recesses 103; the outer plates 105 being provided with the recesses 107, the plates 105 having skirts 106. Elastomeric balls 104 are held within the corresponding recesses 103 and 107. The above said elements of the damper are held together on a central axis by pin 110, the pin axis 108 being parallel to the bundled conductors axis. The diaphragm 101 is mounted on the pin 110 by means of a boss 111 with a damping bush 112 made of butyl resin and an anti-friction insert 113 made of fluoroplastic or nylon or a mixture thereof. The radius of the circle along which the relatively outer recesses are formed is approximately twice the size of the one along which the relatively inner recesses are formed.

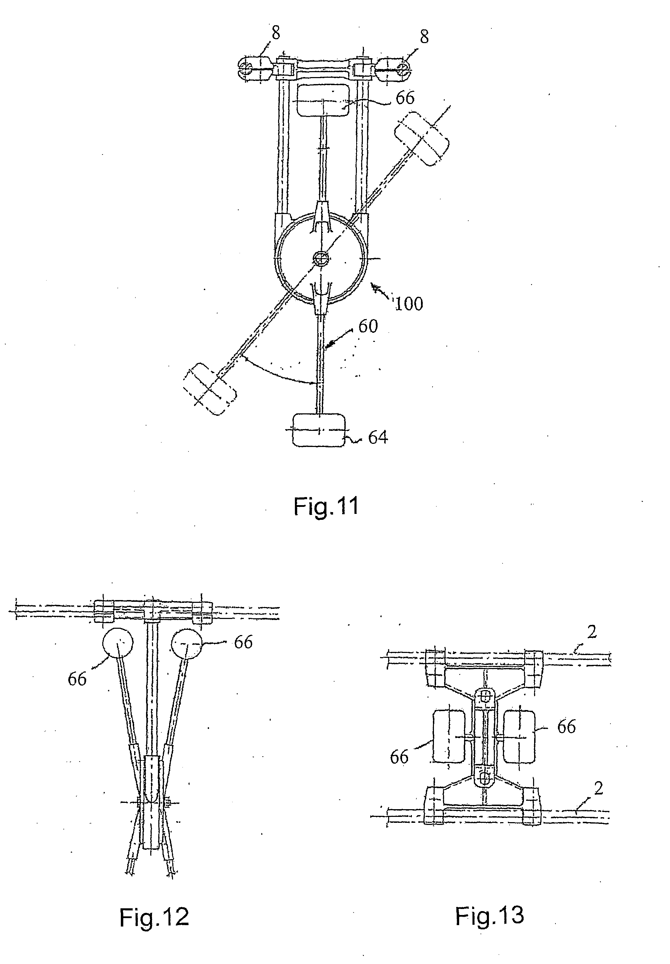

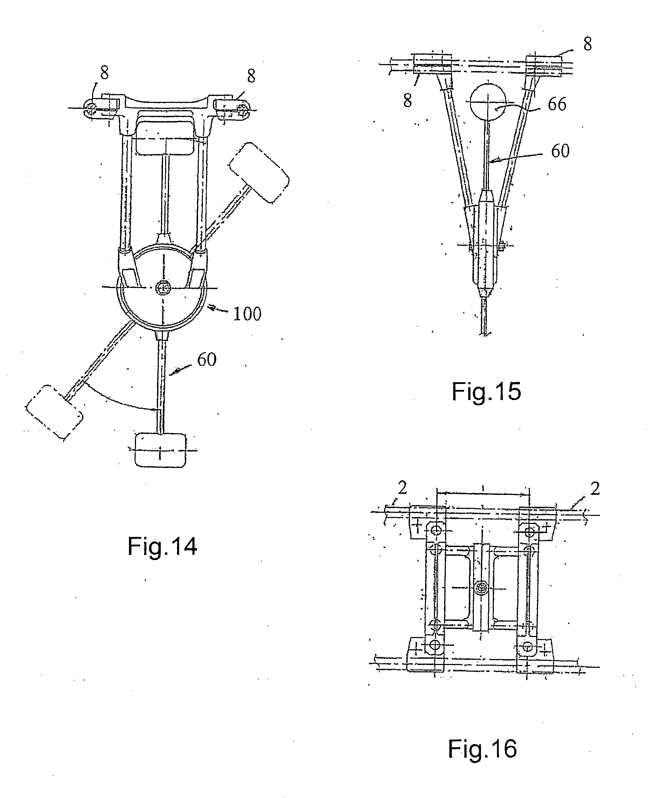

Referring now to Figures 11 to 13 and 14 to 16 there are shown two embodiments of the damper meant for twin bundles, each having substantially similar features to those disclosed in relation to Figures 1 and 2 with the hub arrangement as described in relation to Figures 3 or 10 and accordingly those features are not disclosed again here. The main difference between these two embodiments of the damper resides in the number of pendulums adopted, namely two pendulums are used for the embodiment as shown in Figures 11 to 13 and only one pendulum is used in the embodiment shown in Figures 14 to 16.

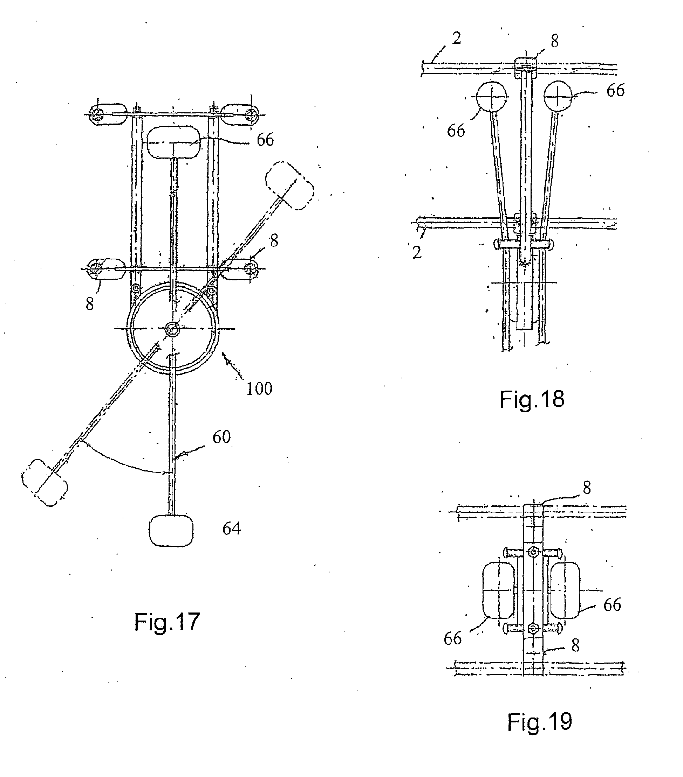

The embodiment of Figures 17 to 19 is meant for quad bundles, the arrangement of the used hub 6 being disclosed in relation to Figure 3 or 10.

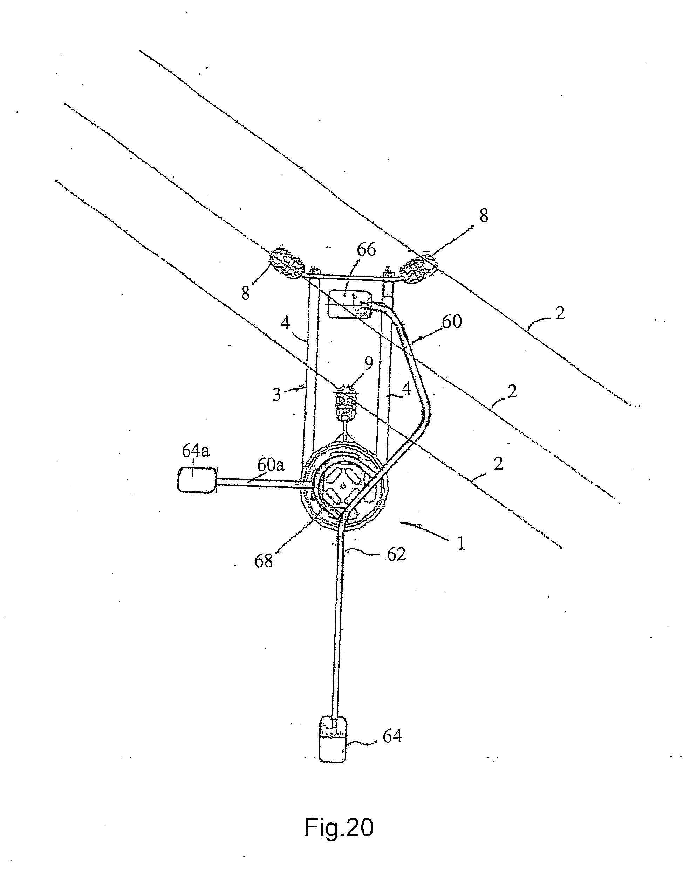

With reference to Figures 20 to 22, a system of pendulums 64, 66 may be provided with an additional bob 64a having an arm 60a, therefore the centre of mass of said system may be offset against pendulum pivot along the vertical or/and the horizontal axis. This offset enables adjusting pendulum frequency and increases damper sensitivity to purely vertical vibrations of the bundled conductors. The rods carrying the bob of the pendulums 60 may be disposed horizontally or at a certain angle about the damper pin 20, whereas the relative position of said pendulums and their lengths are determined on the basis of relative positions of the bundles at an overhead line.

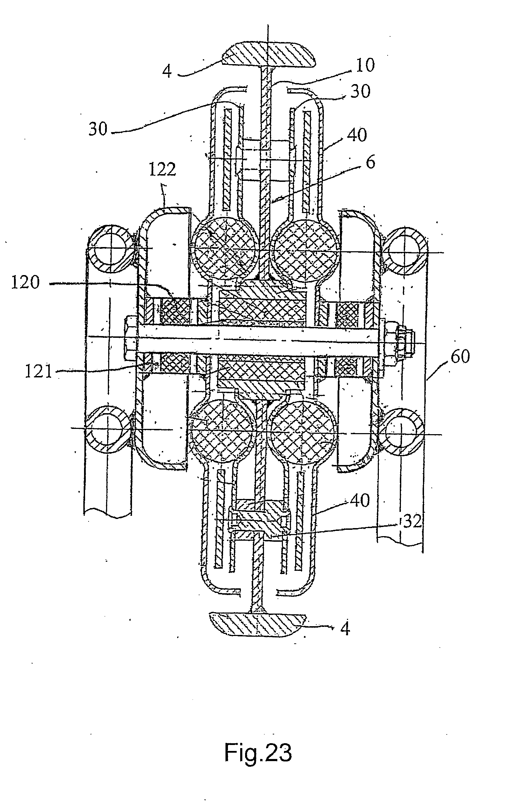

With reference to Figure 23, between the outer plates 40 and the pendulums 60 the damper comprises an additional element of butyl resin, namely a bush 120 provided with shaped bosses at its ends and closed with an additional cap 122, said shaped bosses being engaged with outer plates 40 from one side and pendulums 60 from the other side. Adding this element to the damper design increases its movable system compliancy under small angular displacements. In order to keep the bush 120 safe from overloads and premature wear said embodiment comprises stoppers limiting angular deformations (omitted for clarity).

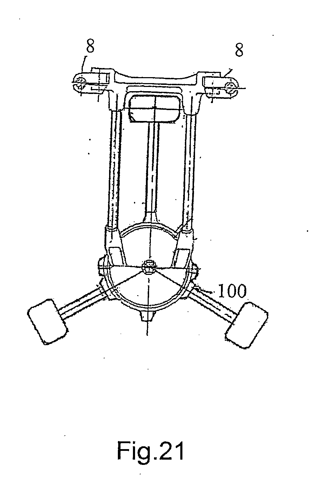

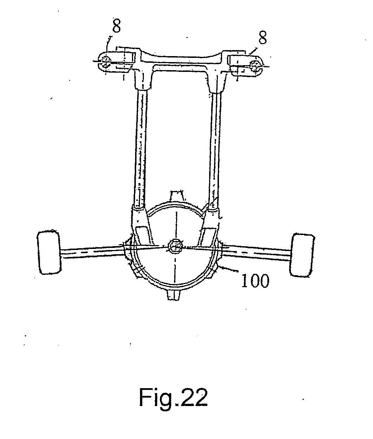

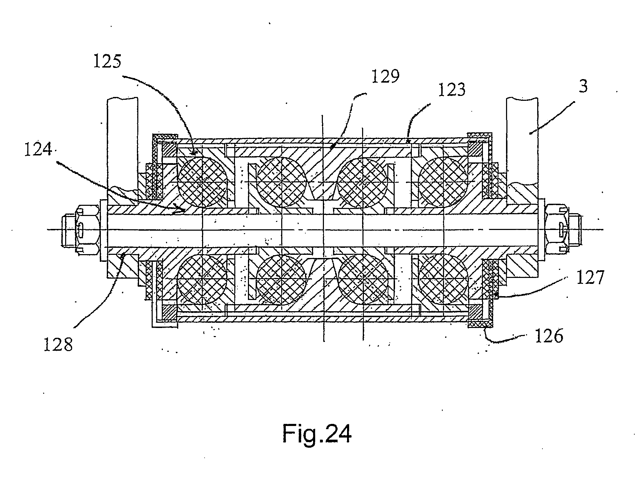

With reference to Figure 24, the damper may be manufactured in such a manner that its construction is better sealed and compact-sized due to a tubular protective casing 123, comprising the inner series of spacer rings 124 and the outer series of spacer rings 125 with conical surfaces, said casing being protected at its ends by weather-resistant elastomeric caps with fluoroplastic seals 127. Between the inner and the outer series of spacer rings 124,125 spherical elastomeric inserts are disposed. Such damper construction with elastomeric inserts located in the minimal distance from the axis decreases the risk of immobilization of the pendulum caused by moisture, penetrating and freezing within the casing. Conic surfaces of the opposite spacer rings 124,125 are provided with recesses 34,36, whereas the inner series of spacer rings is connected to the arms of the body 3 by means of spline joints 128 and the outer series of the spacer rings is also fixed within the protective casing 123 by means of spline joints 129. The pendulum 60 (omitted for clarity) is attached to the protective casing 123. This embodiment of the damper is disclosed for the construction with one central pendulum (Figures 21, 22). The embodiments with two pendulums is almost similar except that the pendulums are attached to the spline joints 128 instead of the arms 3, wherein the arms 3 are attached to the protective casing 123. The embodiment of the damper disclosed in Figure 24 improves its function under conditions of heavy glaze-ice and rime depositions, high air humidity and multiple air temperature crossings of zero level.

In operation of the embodiment of the damper disclosed in relation to Figures 1 to 6, the clamps 8, 9 are secured to respective overhead bundled conductors (in this example being three in number) as shown, the damper 1 taking up a central pendent position in terms of the triangular disposition of the conductors and thus the clamps and the bush 17 being the supporting elements for the damper. The invention is particularly suitable for deployment on overhead power transmission lines in countries with cold climatic conditions, for example Canada, where frost, ice and snow deposits can cause galloping of the conductors. The other embodiments of the damper will operate in similar manner.

Galloping of the conductors can occur under prevailing atmospheric conditions, and the action of the damper is aimed at weakening this effect and thus avoiding the potentially disastrous results of conductor galloping. As galloping occurs, the pendulums tend to swing thus transmitting torsional effects upon the inner and outer plates which in turn are affected by the friction in the bush 17 and in the elastomeric spherical inserts to the extent that damping and detuning are achieved.

The damper of the present invention is based on the principle of creation of two parallel chains constituted by the flexible dissipative components. The function of a flexible spring is performed by the elastomeric spherical inserts 50 disposed within the recesses 34, 36. The shape of the recesses as hereinbefore described and shown in the figures ensures that the restoring force due to relative displacement of the inner and outer plates is realised instantly even at small displacements. This effect is enhanced by the form of the recesses, particularly in terms of their diminishing depth and conic shape. The inserts 50 thus function as the flexible element in the relevant series, i. e. inner or outer. When the spherical inserts are deformed within the recesses, significant energy dissipation occurs as a result of some damping in the relevant chain. It has been found that the present invention can achieve the logarithmic decrement of oscillations up to the values of 0.6 to 1.5.

The role of the dissipative Voight chain in the present invention is performed by the elastomeric spherical inserts within their associated recesses. These recesses are of elongate form so to ensure substantially that the inserts only rotate when there is relevant movement between the inner and outer plates in combination with the effect of friction of each ball in contact with the limiting surfaces of the plates. It may be necessary to include some means of supporting the central position of the inserts within their respective recesses and in this connection a locating element (not shown) may be provided in order to prevent seizing of the inserts during functioning of the damper. Essentially therefore the function of the elastomeric inserts in the relatively outer recesses is to provide damping whereas the function of the inserts in the relatively inner recesses is to provide stiffness of the system and in combination provide damper function based on detuning principle.

In operation as the rotation angle as between the plates and the hub increases, the deformation of the relatively outer elastomeric spherical inserts within their recesses increases, but only to the extent necessary for retaining each one in the middle of the recesses. This effect is achieved by shallowing the recesses from their central region to their ends. An additional effect is also achieved by the rounded base of the recesses whereby the inserts are retained in the central position when the plates rotate in use. In any case any displacement from this symmetrical position with respect to the plates causes increase of the deformation of the elastomer, thus ensuring the stabilisation of the inserts.

It shall be understood that the setting of the damper may be changed by adjustment of the pendulum and its arm lengths and bob weights as well as hub distance from the bundled conductors. Alternatively or in addition the number of series of recesses and the number of inserts may be adjusted to cater for specific conductor arrays and/or range of changes of climatic conditions.

The present invention thus provides a means for reducing galloping of bundled conductors by (i) detuning vertical from torsional oscillations and (ii) adding significant damping in the torsional oscillation to induce appropriate phase shifting between vertical and torsional rotary movement to avoid energy transfer from the wind to the vertical oscillation.

The damper is compact in size, mechanically strong and relatively easy to install.

## Claims

1. A damper (1) for galloping bundled conductors (2) for overhead power transmission lines, comprising a body (3) provided with at least two connecting means (8) for connecting of the damper to each of the conductors (2), **characterised in that** it is provided with a hub (6) carried by the body (3) and comprising an assembly of inner and outer plates (30, 40) concentrically mounted on a central pin (20), the outer plates (40) being fixed to the pin (20) on both sides of the inner plates (30), the inner plates (30) being mounted on the pin (20) by means of an elastomeric bush (17) and being secured to the hub (6), the plates (30, 40) are provided with at least two series of recesses (34, 36) each series is disposed concentrically with the pin (20) along a circle with different radius, corresponding recesses (34, 36) on the inner plates (30) and the outer plates (40) being coupled in matching pairs, within each matching pair of said coupled recesses a spherical elastomeric insert (50) being provided for frictional engagement within the plates (30, 40), whereas at least one pendulum (60) being affixed to either one of the inner or outer plates (30, 40) in a plane orthogonal to the axis of the central pin (20).

2. A damper according to Claim 1 **characterised in that** it is provided with one pair of outer plates (40) and one pair of inner plates (30), the hub (6) being sandwiched between the inner plates (30), whereas the outer plates (40) being disposed on the other sides of the assembly.

3. A damper according to Claim 1 **characterised in that** the hub (6) is circular with the body (3) embracing a part of its circumferential extent.

4. A damper according to Claim 3 **characterised in that** the body (3) comprises arms (4) at the ends of which distal from the hub (6) the connecting means (8) are located for connection with the conductors (2).

5. A damper according to Claim 4 **characterised in that** the connecting means (8) comprise clamps for positively engaging the conductors (2).

6. A damper according to claim 5 **characterised in that** the plates (30, 40) are circular and the recesses (34, 36) are in the form of elongate channels extending substantially along a part of a circle circumference.

7. A damper according to Claim 6 **characterised in that** each recess is disposed within one quadrant of the plate.

8. A damper according to Claim 7 **characterised in that** each recess has an arcuate or elliptical shape.

9. A damper according to Claim 8 **characterised in that** the recesses (34) are offset along an arc with regard to the recesses (36) disposed on the same plate (30, 40).

10. A damper according to Claim 9 **characterised in that** each recess (34, 36) is of substantially conical shape with hemi-spherical base (35) and rounded ends (37).

11. A damper according to Claim 10 **characterised in that** the depth of the recesses (34, 36) decreases from their centres towards their ends (37).

12. A damper according to Claim 11 **characterised in that** corresponding recesses (34, 36) on the inner and outer plates (30, 40) are matched and coupled in pairs with each other to provide races for the spherical elastomeric inserts (50).

13. A damper according to Claim 12 **characterised in that** each race formed of matching and coupled in pairs recesses (34, 36) comprises one spherical elastomeric insert (5).

14. A damper according to Claim 13 **characterised in that** there are two pendulums (60), each pendulum (60) is attached to a respective plate (40) and comprises a cranked rod (62) carrying a bob (64) and a counterweight (66) at appropriate upper and lower distal ends of the rod (62).

15. A damper according to Claim 14 **characterised in that** each of the pendulums (60) is provided with an additional bob (64a) having an arm (60a), therefore its centre of mass is offset against pendulum pivot along the vertical or/and the horizontal axis.

16. A damper according to Claim 15 **characterised in that** the rods carrying the bobs of the pendulums (60) may be disposed horizontally or under a certain angle about the horizon, the relative position of said pendulums, as well as their lengths being determined by the relative position of the overhead bundled conductors.

17. A damper according to Claim 14 **characterised in that** the middle part of the rod (62) comprises a cranked strap (68) affixed to the outer plate (40).

18. A damper according to Claim 13 **characterised in that** it comprises one pendulum (60), attached to a body (100), which is movable.

19. A damper according to Claim 18 **characterised in that** between the outer plates (30, 40) and the pendulums (60) it comprises an additional element made of butyl resin formed as a bush (120) provided with profiled bosses at its ends and closed with an additional cap (122), said profiled bosses are in engagement with outer plates (30, 40) on one side and the pendulums (60) on the other side.

20. A damper (1) for galloping bundled conductors (2) for overhead power transmission lines comprising a body (3) provided with at least two connecting means (8) for connecting the damper to each of the bundled conductors (2), **characterised in that** it is provided with a tubular protective casing (123), comprising the inner series of spacer rings (124) and the outer series of spacer rings (125) with conical surfaces, said casing being protected at its ends by weather-proof elastomeric caps with fluoroplastic seals (127); spherical elastomeric inserts are disposed between the inner and the outer series of spacer rings (124, 125) and said conic surfaces being provided with recesses (34, 36) for accommodation of these elastomeric inserts, whereas the inner series of the spacer rings is connected to the arms of the body (3) by means of spline joints (128) and the outer spacer rings are fixed within the protective casing (123) also by means of spline joints (129); the pendulum (60) being attached to the protective casing (123).
